# EUROPEAN PATENT APPLICATION

(11) **EP 2 683 170 A2**
(43) Date of publication of application: **08.01.2014**
(21) Application number: 13186877.0
(22) Date of filing: 31.08.2011
(51) Int. Cl.: H04N 13/02, H04N 13/00

(54) **Display apparatus and image generating method thereof**

(30) Priority: 01.09.2010 KR 20100085535
(62) Divisional of application: 11179461.6
(71) Applicant: Samsung Electronics Co., Ltd, Gyeonggi-do 443-742 (KR)
(72) Inventor: Kim, Nak-hyung, Seoul (KR); Kang, Ho-woong, Gyeonggi-do (KR)
(74) Representative: Robinson, Ian Michael

(57) **Abstract**

A display apparatus (100) and an image generating method thereof are provided. The display apparatus includes an image receiver (110) which receives a two-dimensional (2D) image; an image processor (120) which applies depth information to the received 2D image to generate a three-dimensional (3D) image; a storage unit (150) which stores depth information which is preset to a different value, respectively, for a broadcasting mode; and a controller (140) which determines a broadcasting mode of the 2D image and applies depth information corresponding to the determined broadcasting mode among the depth information, which is stored in the storage, to the 2D image to generate the 3D image.

## Description

### CROSS-REFERENCE TO RELATED APPLICATION

This application claims priority from Korean Patent Application No. 10-2010-0085535, filed on September 1, 2010, in the Korean Intellectual Property Office, the disclosure of which is incorporated by reference herein in its entirety.

### BACKGROUND

### 1. Field

Apparatuses and methods consistent with exemplary embodiments relate to displaying three-dimensional (3D) images and, more particularly, to a display apparatus for displaying a 3D image and an image generating method thereof.

### 2. Description of the Related Art

A 3D image has been actively studied with an increase in interest in the 3D image.

In general, viewers most greatly feel a 3D effect through a binocular parallax. Accordingly, a 3D image is realized using this characteristic of a viewer.

For example, a specific subject is divided into a left eye image which is seen through a left eye of a viewer and a right eye image which is seen through a right eye of the viewer, and the left and right eye images are alternately displayed so that the viewer sees the specific subject as a 3D image. Therefore, a binocular image which is divided into left and right eye images are formed and displayed to realize a 3D image.

An example of a two-dimensional (2D) to 3-D (2D-to-3D) conversion technology realizes the conversion through a process that includes depth division and distance optimization in real time.

However, there are disadvantages in that when a real-time 2D-to-3D conversion is executed, a depth is allocated for the depth division and distance optimization processes regardless of a television (TV) broadcasting form in order to process a 2D-to-3D conversion. Accordingly, there is no difference which is seen through the eyes of the viewer according to a broadcasting form such as a movie, a drama, sports, news, entertainment, or the like when a conversion is performed.

### SUMMARY

According to the present invention there is provided an apparatus and method as set forth in the appended claims. Other features of the invention will be apparent from the dependent claims, and the description which follows.

One or more exemplary embodiments may overcome the above disadvantages and other disadvantages not described above. However, it is understood that one or more exemplary embodiments are not required to overcome the disadvantages described above, and a given exemplary embodiment may not overcome any of the disadvantages described above.

One or more exemplary embodiments provide a display apparatus which converts a 2D image into a 3D image (e.g. a stereoscopic image) in consideration of a broadcasting mode and an image generating method thereof.

According to an aspect of an exemplary embodiment, there is provided a display apparatus including: an image receiver which receives a 2D image; an image processor which generates a 3D image from the received 2D image; a storage unit which stores depth information which is preset to a different value, respectively, for at least one broadcasting mode; and a controller which determines a broadcasting mode of the 2D image and controls the image processor to apply depth information corresponding to the determined broadcasting mode among the depth information, which is stored in the storage unit, to the 2D image to generate the 3D image.

The image processor may include an object divider which divides the 2D image into a plurality of object images of objects in the 2D image, based on distances between the objects; a distance adjuster which applies the depth information corresponding to the determined broadcasting mode to the plurality of object images to adjust depth distances; and an image divider which divides the 2D image to which the depth information has been applied, into left and right eye images.

The depth information may be a depth weight with respect to a standard depth value.

The display apparatus may further include a user interface unit which provides an on-screen-display (OSD) menu for selecting a broadcasting mode, wherein the controller determines the broadcasting mode selected through the OSD menu as the broadcasting mode of the 2D image.

The image receiver may receive broadcasting program information corresponding to the 2D image, and the controller may determine a broadcasting mode provided in the broadcasting program information as the broadcasting mode of the 2D image.

The at least one broadcasting mode may include at least one of a movie mode, a drama mode, a sports mode, a news mode, a documentary mode, an entertainment mode, and a culture mode.

According to an aspect of another exemplary embodiment, there is provided an image generating method of a display apparatus. The image generating method may include determining a broadcasting mode of a 2-dimesnional (2D) image; and applying depth information corresponding to the determined broadcasting mode among depth information, which is preset to a different value, respectively, for at least one broadcasting mode, to generate a 3-dimensional (3D) image.

The image generating method may further include receiving the 2D image.

The generation of the 3D image may include dividing the 2D image into a plurality of object images of objects in the 2D image, based on distances between the objects; applying the depth information corresponding to the determined broadcasting mode to the plurality of object images to adjust depth distances of the plurality of object images; and dividing the 2D image to which the depth information has been applied, into left and right eye images.

The depth information may be a depth weight with respect to a standard depth value.

The image generating method may further include providing an OSD menu for selecting a broadcasting mode, wherein the determination of the broadcasting mode includes determining a broadcasting mode selected through the OSD menu as the broadcasting mode of the 2D image.

The image generating method may further include receiving broadcasting program information corresponding to the 2D image, wherein the determination of the broadcasting mode includes determining a broadcasting mode provided in the broadcasting program information as the broadcasting mode of the 2D image.

The at least one broadcasting mode may include at least one of a movie mode, a drama mode, a sports mode, a news mode, a documentary mode, an entertainment mode, and a culture mode.

According to an aspect of another exemplary embodiment, there is provided a display apparatus. The display apparatus may include an image processor which generates a 3-dimensional (3D) image from a 2-dimensional (2D) image; a storage unit which stores depth information for each of a plurality of types of broadcast; and a controller which determines a type of the broadcast of a 2D image, and controls the image processor to apply depth information, which corresponds to the determined type from among the depth information which is stored in the storage unit, to the 2D image to generate the 3D image.

The image processor may further comprise an object divider which divides the 2D image into a plurality of object images of objects in the 2D image, based on distances between the objects; a distance adjuster which applies the depth information corresponding to the determined type to the plurality of object images to adjust depth distances of the object images; and an image divider which divides the 2D image to which the depth information has been applied, into left and right eye images.

The types of broadcast may comprise at least two of a movie, a drama, sports, news, a documentary, an entertainment, and a culture broadcast.

### BRIEF DESCRIPTION OF THE DRAWINGS

The above and/or other aspects will be more apparent by describing in detail exemplary embodiments, with reference to the accompanying drawings, in which:

FIG. 1 is a view illustrating a 3D image providing system according to an exemplary embodiment;

FIG. 2 is a block diagram illustrating a structure of a display apparatus according to an exemplary embodiment;

FIG. 3 is a block diagram illustrating a structure of an image processor according to an exemplary embodiment;

FIGS. 4A and 4B are views illustrating a mode setting method according to an exemplary embodiment;

FIGS. 5A and 5B are views illustrating a mode applying method according to an exemplary embodiment; and

FIG. 6 is a flowchart illustrating an image generating method according to an exemplary embodiment.

### DETAILED DESCRIPTION

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they could obscure the exemplary embodiments with unnecessary detail.

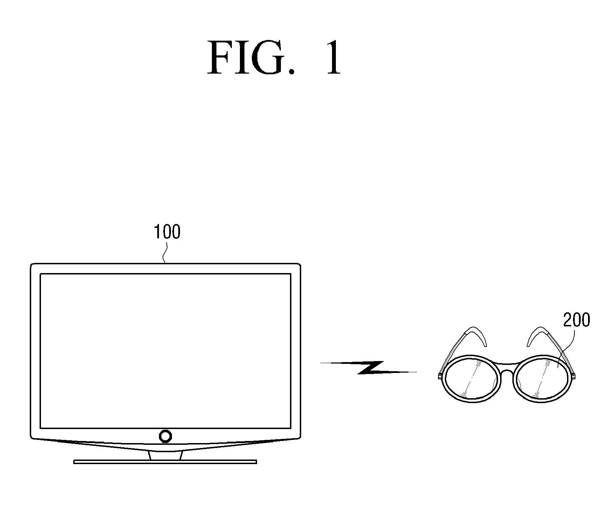

FIG 1 is a view illustrating a 3D image providing system according to an exemplary embodiment. Referring to FIG. 1, the 3D image providing system includes a display apparatus 100 which displays a 3D image on a screen and 3D glasses 200 through which the 3D image is viewed.

The display apparatus 100 may be realized to display only the 3D image, or to display both a 2D image and the 3D image.

If the display apparatus 100 displays a 2D image, the display apparatus 100 uses the same method as an existing 2D display apparatus. If the display apparatus 100 displays the 3D image, the display apparatus 100 converts a received 2D image into a 3D image and displays the 3D image on the screen. The display apparatus 100 may receive a 3D image, process the 3D image, and display the processed 3D image on the screen. The 3D image may be received from a photographing apparatus such as a camera or the like, and may receive a 3D image which is captured by a camera. Alternatively, the 3D image may be received from a broadcasting station, where the 3D image is edited and/or processed by a broadcasting station and transmitted from the broadcasting station.

In particular, the display apparatus 100 processes a left eye image and a right eye image, time-divides the processed left eye image and right eye image, and alternately displays the time-divided left and right eye images.

The 3D glasses 200 may be realized as active type shutter glasses. Shutter glasses are a pair of glasses for implementing a shutter glass method. A shutter glass method refers to a displaying method using a binocular parallax, i.e., a method which is to synchronize on-off operations of left and right glasses of 3D glasses with an image provided by a display apparatus so as to recognize a space sense of an image, which is observed at different angles, due to a brain operation of a viewer.

The principle of the shutter glass method is to synchronize left and right image frames played from the display apparatus 100 with a shutter installed at the 3D glasses 200. In other words, left and right glasses of the 3D glasses 200 are selectively opened and/or closed according to left and right image signals of the display apparatus 100 to form a 3D image.

A plurality of 2D images having binocular parallaxes are used to realize a 2D image as a 3D image (i.e., a stereoscopic image). In the case of an existing captured 2D image, images having a binocular parallax with an original image are generated using the original image. For example, a first image (e.g., a left eye image) and a second image (e.g., a right eye image) having a binocular parallax with each other may be generated using an original image.

For convenience of understanding and explanation, the present specification describes that first and second images having a binocular parallax with each other are generated from an original image in order to explain a principle in which a human viewer recognizes a target object. However, depending on which realization method is applied, an image having a binocular parallax with an original image may be generated and then may be combined with the original image to generate a 3D image.

A human viewer views 2D images of a target object through both eyes. A brain of the human viewer synthesizes the 2D images obtained through both eyes to recognize a 3D effect of the target object.

Hereinafter, a method of converting a 2D image into a 3D image will be described.

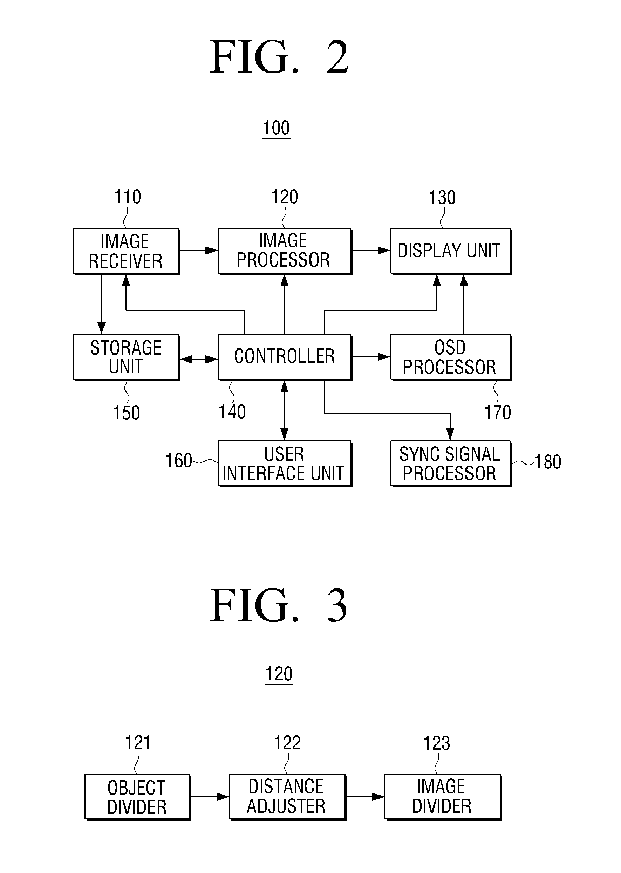

FIG. 2 is a block diagram illustrating a structure of a display apparatus 100 according to an exemplary embodiment.

Referring to FIG. 2, the display apparatus 100 includes an image receiver 110, an image processor 120, a display unit 130, a controller 140, a storage unit 150, a user interface unit 160, an on-screen-display (OSD) processor 170, and a sync signal processor 180.

The image receiver 110 receives a 2D image signal from a broadcasting station or a satellite by wire or by wireless in real time and demodulates the 2D image signal. The image receiver 110 may also be connected to an external device such as a camera or the like to receive a 2D image from the external device. The external device may be connected to the image receiver 110 by wireless or may be connected to the image receiver 110 by wire through an interface such as Super-video (S-Video) interface, a component interface, a composite interface, a D-subminiature (D-Sub) interface, a digital visual interface (DVI) interface, a high definition multimedia interface (HDMI), or the like.

The image receiver 110 transmits the received 2D image to the image processor 120.

The image processor 120 applies a depth to the received 2D image to generate a 3D image.

In more detail, the image processor 120 first performs a process of dividing the received 2D image into frames and sequentially storing the frames as 2D images. Thereafter, the image processor 120 divides the 2D image corresponding to the received 2D image into a plurality of partial entities, sets stereoscopic information with respect to each of the plurality of partial entities, and converts the plurality of partial entities into a 3D image.

The image processor 120 also applies depth information corresponding to a broadcasting mode of a corresponding image among depth information which is respectively preset with respect to pre-stored broadcasting modes, in order to generate a 3D image. Here, preset and pre-stored denotes that the depth information is set and/or stored sometime prior to the depth information being used in the conversion process, and may include both that the depth information set and stored at the manufacturer, or that the depth information set and stored by the viewer.

The image processor 120 also performs signal processing, such as video decoding, format analyzing, video scaling, or the like, and a job such as adding a graphic user interface (GUI) or the like, with respect to the generated 3D image.

In particular, the image processor 120 respectively generates a left eye image and a right eye image corresponding to a size (e.g., 1920x1080 pixels) of a screen using a format of the generated 3D image.

The image processor 120 time-divides the left and right eye images and alternately transmits the time-divided left and right eye images to the display unit 130. In other words, the image processor 120 transmits the left and right eye images to the display unit 130 in a time order of "left eye image L1 -> right eye image R1 -> left eye image L2 -> right eye image R2, etc...."

The image processor 120 processes an OSD image generated by the OSD processor 170 so that the OSD image corresponds to a format of the display unit 130 and then provides the processed OSD image to the display unit 130.

The display unit 130 alternately displays the left and right eye images output from the image processor 120.

The controller 140 controls an overall operation of the display apparatus 100 according to a command received from the user interface unit 170 or according to a preset option.

In particular, the controller 140 controls the image receiver 110 and the image processor 120 to receive the 3D image, divide the received 3D image into the left and right eye images, and scale or interpolate each of the left and right eye images to a size which is displayable on a screen.

The controller 140 also controls the display unit 130 to switch a polarization direction of an image provided through the display unit 130 so that the polarization direction of the image agrees with the left or right eye image.

In particular, the controller 140 controls the image processor 120 to determine a broadcasting mode of the 2D image received through the image receiver 110 and apply depth information corresponding to the determined broadcasting mode among the depth information which is respectively preset with respect to the broadcasting modes stored in the storage unit 150 in order to generate the 3D image.

The storage unit 150 is a storage device which stores various programs for operating the display apparatus 100 and may be realized as a memory, a hard disk drive (HDD), or the like. For example, the storage unit 150 may include a read only memory (ROM) which stores a program for performing an operation of the controller 140, a random access memory (RAM) which temporarily stores data generated by the performance of the operation of the controller 140, and the like. The storage unit 150 may further include an electrically erasable and programmable ROM (EEROM) which stores various types of reference data.

The storage unit 150 stores standard depth information and the depth information which is set with respect to each of the broadcasting modes.

Here, the broadcasting modes may include, for example, at least one of a movie mode, a drama mode, a sports mode, a news mode, a documentary mode, an entertainment mode, and a culture mode. Each of the broadcasting modes may be divided into sub-broadcasting modes. For example, the drama mode may be divided into sub-broadcasting modes such as a melodrama mode, an action mode, a thriller mode, and the like, and depth values may respectively preset and pre-stored with respect to the sub-broadcasting modes.

The storage unit 150 stores the depth information of each of the broadcasting modes in a weight form with respect to the standard depth information.

For example, the storage unit 150 may store weights of the broadcasting modes as forms of MOVIE: +30%, SPORTS: +20%, ENTERTAINMENT: +10%, DRAMA: ±0%, NEWS: -20% with respect to standard depth values. The weights of the broadcasting modes may be preset by a manufacturer or may be set to be changed by a viewer.

The above-described numerical values are exemplarily described for convenience of explanation and may be modified in various forms.

The user interface unit 160 transmits a command, which is received from an input unit such as a remote controller, an input panel, or the like, to the controller 140.

The OSD processor 170 generates an OSD message which overlaps with the 2D image or the 3D image output from the display unit 130. Here, the OSD message may be a 2D or 3D image.

An OSD screen refers to a screen which displays a warning message, a menu screen, letters or figures such as time, channel numbers, or the like and may overlap with a display image. For example, the warning message may be displayed in an OSD form according to a preset option or event.

A viewer may control input units such as a control panel, a remote controller, and the like to select a desired function from menus so as to display a main menu, a submenu, or the like in an OSD form on a display screen.

These menus may include option items which may be selected in a display apparatus or items which may control a function of a display apparatus.

The OSD processor 170 performs operations, such as a 2D/3D operation, a transparency operation, a color operation, a size operation, a form and position control operation, a highlight operation, an animation effect operation, and the like of the OSD screen, under the control of the controller 140.

The sync signal processor 180 generates a sync signal which is used to alternately open a left shutter glass and a right shutter glass of the 3D glasses 200 with respect to display timings of the left and right eye images and transmits the sync signal to the 3D glasses 200. This is to alternately open and/or close the 3D glasses 200 so as to display the left eye image at a left eye open timing of the 3D glasses 200 and the right eye image at a right eye open timing of the 3D glasses 200 on the display unit 130. Here, the sync signal may be transmitted in an infrared form. Alternatively, the sync signal may be transmitted in another form, such as a radio frequency form or a Bluetooth form.

The controller 140 controls the overall operation of the display apparatus 100 according to a control which is received from the user interface unit 170.

In particular, the controller 140 controls the image receiver 110 and the image processor 120 to receive the 2D image, allocate depth information to the received 2D image to divide the received 2D image into the left and right eye images, and scale or interpolate each of the left and right eye images to the size which is displayable on a screen.

The controller 140 also controls the OSD processor 170 to generate an OSD corresponding to the control received from the user interface unit 160 and controls the sync signal processor 180 to generate and transmit the sync signal which synchronizes with output timings of the left and right eye images.

The display unit 130 may include detailed components such as a panel driver (not shown), a display panel part (not shown), a backlight driver (not shown), and a backlight emitter (not shown), and detailed descriptions of them will be omitted herein.

The 3D glasses 200 alternately open and/or close the left and right shutter glasses according to the sync signal received from the display apparatus 100 so that a user views the left and right images through left and right eyes.

The 3D glasses 200 includes an infrared (IR) receiver (not shown), a controller (not shown), a driver (not shown), and a glass part (not shown).

The IR receiver of the 3D glasses receives the sync signal of the 3D image from the sync signal processor 180 of the display apparatus 100 which is connected to the 3D glasses 200 by wire or wireless. In particular, the sync signal processor 180 emits the sync signal using infrared rays, and the IR receiver 210 receives the sync signal from the emitted infrared rays.

For example, the sync signal transmitted from the sync signal processor 180 to the IR receiver may be a signal which alternates a high level and a low level at preset time intervals. The sync signal may be realized so as to transmit the left eye image on the high level and the right eye image on the low level, or vice versa.

The IR receiver of the 3D glasses transmits the sync signal received from the sync signal processor 180 to the controller.

The controller of the 3D glasses controls an overall operation of the 3D glasses 200. In particular, the controller generates a control signal based on the sync signal received from the IR receiver and transmits the control signal to the driver of the 3D glasses to control the driver. The controller controls the driver to generate a driving signal for driving the glass part, based on the sync signal.

The glass part of the 3D glasses includes left and right shutter glasses. The shutters of the left and right shutter glasses may be realized as liquid crystals. In other words, the glass part opens and/or closes a shutter using the liquid crystals of the left and right shutter glasses.

The 3D glasses 200 may further include a power supply unit (not shown) which supplies power to the 3D glasses 200. A power state of the power supply unit is controlled by the controller of the 3D glasses.

According to various exemplary embodiments of the present inventive concept, different image generating methods may be applied depending on whether a received 2D image is an analog broadcasting image or a digital broadcasting image.

### Analog Broadcasting Image

For example, if the received 2D image is an analog broadcasting image, a broadcasting signal does not include broadcasting program information. Therefore, a broadcasting mode is directly received from a viewer.

In this case, the user interface unit 160 may provide an OSD menu for receiving the broadcasting mode, and a desired broadcasting mode may be selected and input.

The controller 140 controls the image processor 120 to apply depth information corresponding to a broadcasting mode, which is input through an OSD menu, among the depth information which is set and stored respectively in the storage unit 150 for each of the broadcasting modes, in order to generate the 3D image.

### Digital Broadcasting Image

If the received 2D image is the digital broadcasting image, the broadcasting signal generally includes broadcasting program information (e.g., electronic program guide (EPG) information). Therefore, a broadcasting mode of a corresponding program may be determined using the broadcasting program information.

In this case, the image receiver 110 receives broadcasting program information corresponding to the 2D image.

The controller 140 determines a broadcasting mode of the 2D image based on the broadcasting program information received through the image receiver 110 and applies depth information corresponding to the determined broadcasting mode from among the depth information, which is set and stored respectively in the storage unit 150 for each of the broadcasting modes, to generate the 3D image.

FIG. 3 is a block diagram illustrating a structure of an image processor 120 according to an exemplary embodiment.

Referring to FIG. 3, the image processor 120 includes an object divider 121, a distance adjuster 122, and an image divider 123.

The object divider 121 divides a 2D image into a plurality of object images based on distances of objects of the 2D image. In more detail, the object divider 121 divides the 2D image into a central object and partial objects and analyzes depth information of the main and partial objects which depend on distances.

The distance adjuster 122 applies depth information, which is respectively preset with respect to broadcasting modes (as described above), to the plurality of object images to adjust depth distances of the plurality of object images.

In more detail, the distance adjuster 122 allocates depth weights, which are respectively preset with respect to the broadcasting modes, to adjust the depth distances.

The image divider 123 divides the 2D image for which depth distance has been adjusted by the distance adjuster 122, into left and right eye images to generate a 3D image.

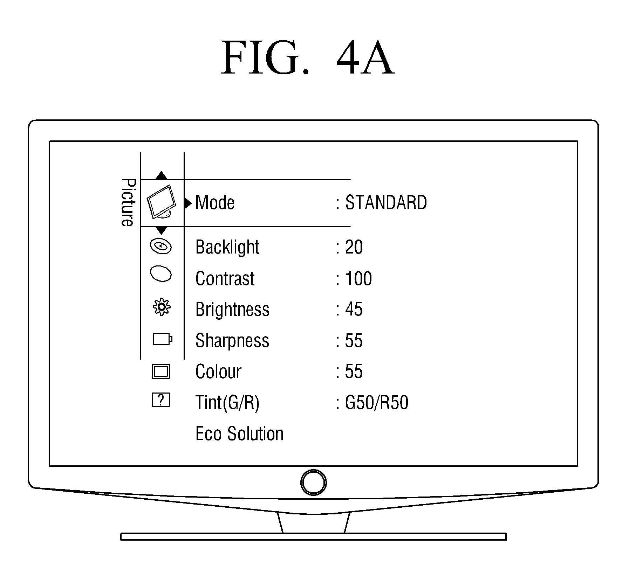

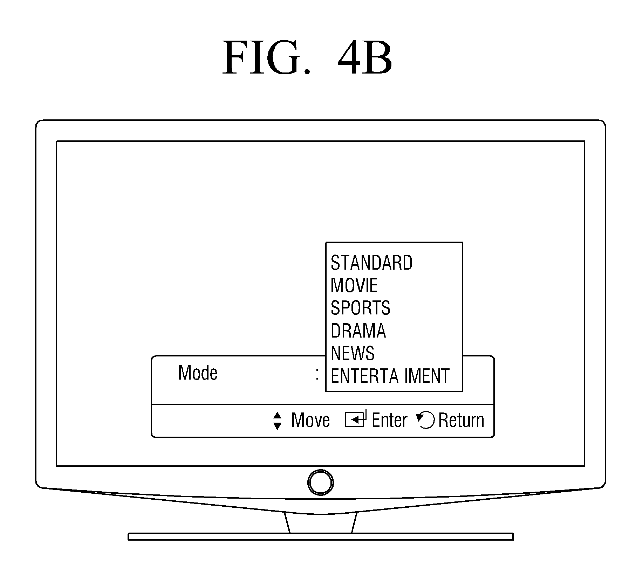

FIGS. 4A and 4B are views illustrating a mode setting method according to an exemplary embodiment.

As shown in FIG. 4A, if viewing of 3D broadcasting is desired, a desired broadcasting mode is set using an OSD.

FIG. 4B illustrates a screen for setting a broadcasting mode provided through an exemplary OSD. As shown in FIG. 4B, a desired broadcasting mode is selected from various broadcasting modes, for example, the broadcasting modes may include "STANDARD, MOVIE, SPORTS, DRAMA, NEWS, and ENTERTAINMENT," as shown in FIG. 4B. This selected mode may be particularly applied when an analog 2D image is converted into a 3D image as described above.

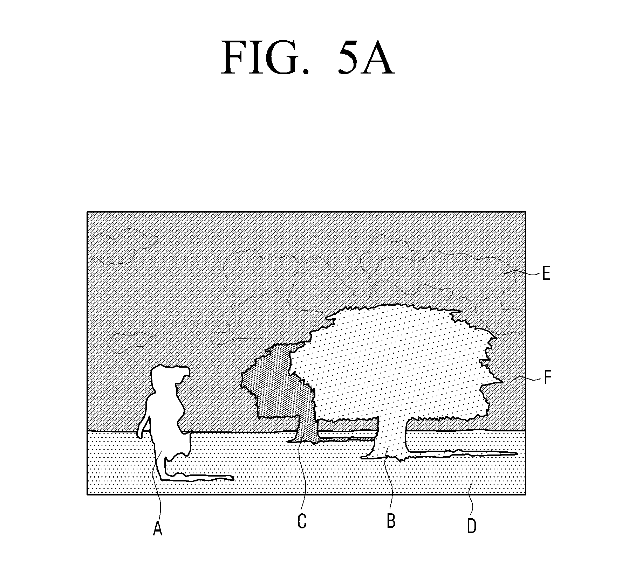

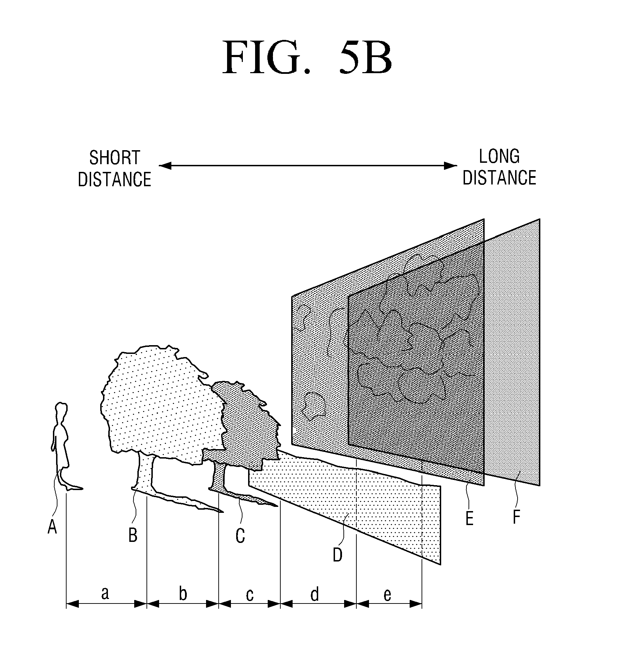

FIGS. 5A and 5B are views illustrating a depth applying method according to an exemplary embodiment.

FIG. 5A is a view illustrating an object dividing method of the object divider 121.

Referring to FIG. 5A, the object divider 121 divides a 2D image into objects A, B, C, D, E, and F, depending on distances between the objects A, B, C, D, E, and F of the 2D image, i.e., long distances/short distances of the objects A, B, C, D, E, and F.

FIG. 5B is a view illustrating a distance adjusting method of the distance adjuster 122.

Referring to FIG. 5B, the distance adjuster 122 applies depth weights to distances a, b, c, d, and e of the objects A, B, C, D, E, and F to adjust the distances a, b, c, d, and e. The depth weights are applied with respect to a standard depth value, which is preset for each of the various broadcasting modes.

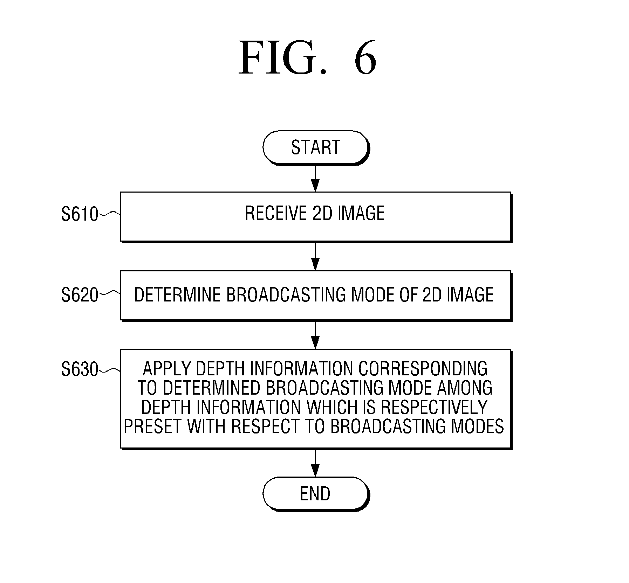

FIG. 6 is a flowchart illustrating an image generating method of a display apparatus according to an exemplary embodiment.

Referring to FIG. 6, the image generating method includes receiving a 2D image (S610). Here, the 2D image may be real-time 2D image data.

A broadcasting mode of the 2D image is determined (S620).

Among depth information which is respectively preset with respect to broadcasting modes, depth information corresponding to the determined broadcasting mode is applied to generate a 3D image (S630).

The generation of the 3D image (S630) may include dividing the 2D image into a plurality of object images based on distances of objects of the 2D image. The generation of the 3D image (S630) may further include applying corresponding depth information to the plurality of object images among the depth information, which is respectively preset with respect to the broadcasting modes, to adjust depth distances of the plurality of object images. The generation of the 3D image (S630) may further include dividing the 2D image of which depth distance has been adjusted, into left and right eye images.

The adjustment of the depth distance may include allocating depth weights which are respectively preset with respect to the broadcasting modes in order to adjust the depth distance.

Also, an OSD menu for receiving a broadcasting mode may be provided. In this case, a broadcasting mode of the 2D image may be determined based on the broadcasting mode input through the OSD menu. For example, in the case of an analog image signal that is transmitted without broadcasting program information thereof, a broadcasting mode may be set through the OSD menu.

Alternatively, the broadcasting program information corresponding to the 2D image may be received along with the 2D image. In this case, the broadcasting mode of the 2D image may be determined based on the broadcasting program information. For example, in the case of a digital image signal that is transmitted along with broadcasting program information thereof, the broadcasting mode of the 2D image may be determined based on the broadcasting program information.

Here, the broadcasting modes may include at least one of a movie mode, a drama mode, a sports mode, a news mode, a documentary mode, an entertainment mode, and a culture mode. Each of the broadcasting modes may be divided into sub-modes. For example, the movie mode may be divided into sub-modes such as an action mode, a melodrama mode, a thriller mode, and the like.

The display apparatus to which the above-described image generating method has been applied may be a shutter glass type 3D image display.

According to the present inventive concept as described above, a depth of a 3D image can be adjusted according to a type of the broadcast.

Therefore, in the case of a broadcast of which a main purpose is to transmit information such as news, a depth can be minimized, and fatigue of eyes can be reduced so that a viewer may more easily concentrate on contents of the broadcast. Also, in the case of a broadcast of which a main purpose is to transmit image beauty such as a movie, a depth can be maximized so that viewers may more easily and realistically enjoy a 3D image.

Accordingly, a method of constantly executing a 2D-to-3D conversion can be avoided, and thus it is possible to maximize 3D viewing satisfaction through a variable 2D-to3D conversion.

The present inventive concept can also be embodied as a computer-readable recording medium which includes a program which is executable by a computer or processor for performing an image generating method of a display apparatus. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus, comprising:
an image receiver (110) arranged to receive a two-dimensional (2D) image;
an image processor (120) arranged to generate a three-dimensional (3D) image by a process including applying depth information to the received 2D image;
**characterised in that** the display apparatus further comprises:
a storage unit (150) arranged to store a plurality of depth information which is respectively preset differently with respect to a plurality of different modes;
a user interface unit (160) arranged to provide an on-screen-display (OSD) menu for selecting a depth information by a user amongst the plurality of depth information stored in the storage unit (150);
a controller (140) arranged to control the image processor (120) to apply to the 2D image the depth information selected by the user through the OSD using the user interface unit (160) to generate the 3D image.

2. The display apparatus as claimed in claim 1, wherein the image processor (120) comprises:
an object divider (121) arranged to divide the 2D image into a plurality of object images based on distances of objects of the 2D images;
a distance adjuster (122) arranged to apply the selected depth information to the plurality of object images to adjust depth distances; and
an image divider (123) arranged to divide the 2D image for which the depth distances have been adjusted, into left and right eye images.

3. The display apparatus as claimed in any preceding claim, wherein the depth information is a depth weight with respect to a standard depth value.

4. The display apparatus as claimed in any preceding claim, wherein the plurality of depth information comprises at least one of a movie mode, a drama mode, a sports mode, a news mode, a documentary mode, an entertainment mode, and a culture mode.

5. An image generating method of a display apparatus, the image generating method comprising:
receiving a two-dimensional (2D) image (S610);
**characterised by:**
providing an on-screen-display (OSD) menu for selecting a depth information by a user amongst a plurality of depth information which is respectively preset differently with respect to a plurality of different modes and stored in a storage unit (150);
applying the depth information (S630) as selected by the user to the 2D image from among a plurality of prestored depth information, in a process to generate a three-dimensional (3D) image.

6. The image generating method as claimed in claim 5, wherein the generation of the 3D image comprises:
dividing the 2D image into a plurality of object images based on distances (a,b,c,d,e) of objects of the 2D image;
applying the selected depth information to the plurality of object images to adjust depth distances of the plurality of object images; and
dividing the 2D image for which the depth distances have been adjusted, into left and right eye images.

7. The image generating method as claimed in claim 5 or 6, wherein the depth information is a depth weight (A,B,C,D,E) with respect to a standard depth value.

8. The image generating method as claimed in any of claims 5 through 7, wherein the plurality of prestored depth information comprise at least one of a movie mode, a drama mode, a sports mode, a news mode, a documentary mode, an entertainment mode, and a culture mode.
